(19) Europäisches Patentamt
European Patent Office
Office européen des brevets

(11) **EP 2 332 796 B1**

(12) **EUROPÄISCHE PATENTSCHRIFT**

(45) Veröffentlichungstag und Bekanntmachung des Hinweises auf die Patenterteilung:
**06.06.2018   Patentblatt 2018/23**

(51) Int Cl.:
**B60T 13/72** *(2006.01)*       **B60T 13/74** *(2006.01)*
**B60T 7/12** *(2006.01)*

(21) Anmeldenummer: **10190644.4**

(22) Anmeldetag: **10.11.2010**

(54) **Verfahren zum Halten eines Fahrzeugs im Stillstand und Auswerte- und Steuervorrichtung zur Durchführung dieses Verfahrens**

Method for keeping a vehicle at stand still and evaluation and control device for executing said method

Procédé pour maintenir un véhicule à l'arrêt et dispositif d'évaluation et contrôle pour exécuter un tel procédé

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.11.2009   DE 102009047122**

(43) Veröffentlichungstag der Anmeldung:
**15.06.2011   Patentblatt 2011/24**

(73) Patentinhaber: **Robert Bosch GmbH**
**70442 Stuttgart (DE)**

(72) Erfinder:
• **Kneip, Frank**
**74360 Ilsfeld (DE)**
• **Mahnkopf, Dirk**
**71634 Eglosheim (DE)**

(56) Entgegenhaltungen:
**DE-A1- 19 950 029       DE-A1-102007 016 136**
**DE-A1-102008 012 874**

EP 2 332 796 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Stand der Technik

In einem hydraulischen Bremssystem eines Kraftfahrzeugs wird meist ein Bremspedal durch den Fahrer betätigt und verschiebt, gegebenenfalls mit Unterstützung eines Bremskraftverstärkers, mechanisch einen Kolben in einem Hauptbremszylinder, an dessen Ausgängen ein Hydraulikaggregat angeschlossen ist. Dadurch wird Bremsflüssigkeit in das Hydraulikaggregat (z.B. ESP oder ABS) eingebracht und zu den Radbremszylindern geleitet. Dort erhöht das eingebrachte Volumen den Bremsdruck und führt durch Anpressen der Bremsbeläge an die Bremsscheiben zu einer Bremswirkung.

Bekannt sind unterschiedliche Ausgestaltungen von Bremskraftverstärkern, beispielsweise pneumatische, hydraulische oder auch elektromechanische Bremskraftverstärker. Ein elektromechanischer Bremskraftverstärkers ist beispielsweise aus der DE 102007016136A1 bekannt. Dort wird zur Ermittlung einer von einem Fahrer aufgebrachten Pedalkraft eine Auswerte- und Steuereinheit verwendet, welche die aktuell wirkende Pedalkraft aus einer Differenz zwischen einer Gesamtbremskraft und einer zusätzlichen Bremskraft berechnet.

Die Offenlegungsschrift DE 10 2008 012 874 A1 offenbart eine Fahrzeugbremsanlage, die hydraulisch betätigbare Radbremsen, ein hydraulisches Druckversorgungssystem mit einem Hauptbremszylinder sowie ein an diesen angeschlossenes Ventilsystem zur Versorgung der Radbremsen mit Bremsdruck umfasst. Ferner umfasst die Fahrzeugbremsanlage eine vorzugsweise piezoelektrisch expandierbare Vorrichtung, die mit dem hydraulischen Druckversorgungssystem zusammenwirkt, um dessen Raumvolumen zu verändern. Bei jeder Bremsbetätigung wird die Höhe des Fahrerbremswunsches ermittelt und in Abhängigkeit dieses Fahrerbremswunsches das Raumvolumen einer expandierbaren Vorrichtung (50) verändert. Hierdurch lässt sich das Pedalgefühl am Bremspedal variabel einstellen. Zudem können bauartbedingte Systemelastizitäten der Fahrzeugbremsanlage vermindert oder vollständig kompensiert werden.

In der DE 199 50 029A1 ist ein Verfahren und eine Vorrichtung zur Bremskraftverstärkung in einem Fahrzeug vorgeschlagen. Dabei wird der Verstärkungsfaktor in wenigstens einer Betriebssituation, vorzugsweise bei Stillstand des Fahrzeugs, gegenüber dem Verstärkungsfaktor außerhalb dieser Situation verändert, vorzugsweise reduziert.

Einrichtungen, die den Zusammenhang Pedalkraft - Pedalweg sowie Pedalkraft - Verzögerung eines Fahrzeugs modifizieren können sind aus sogenannten regenerativen Bremssystemen bekannt. Wenn in einem regenerativen Bremssystem bei einer konventionellen Bremsung ein zusätzliches Generatormoment zur Bremswirkung hinzukommt, so führt dies zu einer erhöhten Verzögerung, was für den Fahrer spürbar und daher unerwünscht ist.
In regenerativen Bremssystemen werden Einrichtungen eingesetzt, mittels derer zum einen der Druck im hydraulischen Bremssystem entsprechend reduziert werden kann um das Gesamtbremsmoment konstant zu halten und zum anderen eine Auswirkung auf die Pedalkennlinie, also den Zusammenhang Pedalkraft - Pedalweg verhindert werden kann.

Offenbarung der Erfindung

In der vorliegenden Erfindung wird ein Verfahren zum Betreiben eines steuerbaren Bremskraftverstärkers einer Bremsanlage sowie einer Zusatzeinrichtung, die in der Lage ist den Pedalweg-Pedalkraft-Zusammenhang einer Betätigungseinheit für die Bremsanlage zu modifizieren und so eine veränderte Rückwirkung über das Betätigungselement des Bremsanlage für den Fahrer zu vermeiden. Dieses Verfahren kommt zum Einsatz, wenn der Fahrer ein Fahrzeug im Stillstand hält.

Des Weiteren wird eine Auswerte- und Steuervorrichtung beschrieben, welche das Verfahren steuert.

Vorteile der Erfindung

Die Erfindung geht von einem steuerbaren Bremskraftverstärker eines Kraftfahrzeugs aus. Dieser steuerbare Bremskraftverstärker ist Teil eines hydraulischen Bremssystems einer Bremsanlage. Die Bremsanlage kann neben dem hydraulischen Bremssystem ein weiteres Bremssystem, so zum Beispiel ein rekuperatives Bremssystem umfassen. Der steuerbare Bremskraftverstärker unterstützt die vom Fahrer aufgebrachte Eingangskraft, um eine Unterstützungskraft zu einer Gesamtbetätigungskraft. Diese Gesamtbetätigungskraft wirkt auf den Hauptbremszylinder, genauer gesagt auf den Eingangskolben des Hauptbremszylinders.

In einer bevorzugten Ausführungsform des erfindungsgemäßen Verfahrens zum Halten eines Fahrzeugs im Stillstand ist es vorgesehen, die vom Bremskraftverstärker aufgebrachte Unterstützungskraft $F\_sup$ zu reduzieren. Diese Reduktion der Unterstützungskraft ruft eine Änderung des Zusammenhangs zwischen einem Stellweg des Betätigungselements und einer Eingangskraft $F\_in$, welche auf das Betätigungselement wirkt, hervor. Der Fahrer spürt diese Änderung der Unterstützungskraft, oder könnte diese Änderung der Unterstützungskraft spüren.
Im erfindungsgemäßen Verfahren ist vorgesehen, dass dieser Änderung des Zusammenhangs zwischen dem Stellweg des Betätigungselements und der Eingangskraft F_in entgegengewirkt wird, insbesondere diese Änderung kompensiert wird. Dieses Entgegenwirken, insbesondere das Kompensieren geschieht dabei durch Einstellen des Zusammenhangs zwischen dem Stellweg des Betätigungselements und der Eingangskraft F_in unabhängig vom Druck im hydraulischen Bremssystem.

Durch das erfindungsgemäße Verfahren kann in vorteilhafter Weise die Unterstützungskraft ausgehend vom Bremskraftverstärker beim Halten des Fahrzeugs im Stillstand reduziert werden, ohne dass der Fahrer dies bemerkt. Auf diese Weise kann der Druck im hydraulischen Bremssystem durch Ansteuern des hydraulischen Bremssystems verändert werden, ohne dass der Fahrer dies merkt.

In einer vorteilhaften Weiterbildung des erfindungsgemäßen Verfahrens ist vorgesehen, dass die von dem steuerbaren Bremskraftverstärker aufgebrachte Unterstützungskraft reduziert wird, wenn eine für ein Halten des Fahrzeugs im Stillstand benötigte Betätigungskraft welche auf einen Hauptbremszylinder wirkt, genauer gesagt auf einen Eingangskolben des Hauptbremszylinders, kleiner als die Gesamtbetätigungskraft ist. Durch die Reduktion der Unterstützungskraft wird die Bremswirkung, die von Fahrer und Bremskraftverstärker gemeinsam hervorgerufen wird an den aktuellen Fahrzeugzustand angepasst. Der steuerbare Bremskraftverstärker muss somit keine Unterstützungskraft aufbringen, die zum Halten des Fahrzeugs nicht, oder nicht in dieser Größe benötigt wird. Diese Reduktion bringt eine Materialschonung des Bremskraftverstärkers mit sich und senkt den Stromverbrauch, was somit Energie spart.

Eine weitere vorteilhafte Ausgestaltung sieht vor, dass die von dem steuerbaren Bremskraftverstärker aufgebrachte Unterstützungskraft auf einen Sollwert reduziert wird, wenn die für ein Halten des Fahrzeugs benötigte Betätigungskraft, welche auf einen Hauptbremszylinder, genauer gesagt auf einen Eingangskolben des Hauptbremszylinders, wirkt, kleiner als die Gesamtbetätigungskraft ist. Dadurch ist gewährleistet, dass bei Reduktion der Unterstützungskraft des Bremskraftverstärkers ein adäquater Zielwert eingenommen wird, so dass das Fahrzeug im Stillstand gehalten wird. Dieser Sollwert wird gemäß einer weiteren vorteilhaften Ausführungsform des erfindungsgemäßen Verfahrens ermittelt. Dabei wird insbesondere der Sollwert für die Unterstützungskraft unter Berücksichtigung der benötigten Betätigungskraft, der vom Fahrer aufgebrachten Eingangskraft sowie eines Sicherheitsbeiwerts a_s ermittelt. Dies hat den Vorteil, dass der Sollwert für die Unterstützungskraft immer an die aktuell benötigte Kraft zum Halten des Fahrzeugs im Stillstand sowie an die vom Fahrer eingebrachte Eingangskraft angepasst ist. Über den Sicherheitsbeiwert a_s kann eine Sicherheitsgrenze festgelegt werden, die der Sollwert nicht unterschreiten darf.

Gemäß einer weiteren Ausführungsform ist eine Vorschrift vorgesehen, gemäß derer der Sollwert für die Unterstützungskraft unter Nutzung der Eingangskraft, der benötigten Betätigungskraft sowie des Wertes a_s ermittelt wird. Dadurch wird die Unterstützungskraft des Bremskraftverstärkers an die vom Fahrer ausgehende Eingangskraft sowie an die zum Halten des Fahrzeugs notwendige Kraft angepasst, gegebenenfalls unter Berücksichtigung einer Sicherheitsgrenze über den Wert a_s.

Gemäß einer weiteren vorteilhaften Ausführungsform ist vorgesehen, dass die zum Halten des Fahrzeugs im Stillstand benötigte Betätigungskraft unter Berücksichtigung einer die Fahrbahnsteigung repräsentierenden Größe ermittelt wird. Diese Größe kann mittels eines Sensors erfasst werden, der im Fahrzeug und/oder im Bremssystem vorgesehen ist. Somit beinhaltet die Bestimmung der zum Halten des Fahrzeugs benötigten Kraft implizit Informationen über die Fahrbahnsteigung, welche beispielsweise über die Hangabtriebskraft für das Halten eines Fahrzeugs von großer Bedeutung ist.

Dazuhin kann die zum Halten des Fahrzeugs im Stillstand benötigte Betätigungskraft unter Berücksichtigung eines Fahrerwunsches ermittelt werden, insbesondere anhand einer Betätigung eines Betätigungselements für die hydraulische Bremsanlage. Dadurch wird in vorteilhafter Weise die Bestimmung der zum Halten des Fahrzeugs im Stillstand notwendigen Kraft erst durchgeführt, und somit das erfindungsgemäße Verfahren erst fortgeführt, wenn der Fahrer das Bremspedal auch wirklich betätigt und somit den Wunsch signalisiert, das Fahrzeug halten zu wollen.

Gemäß einer weiteren vorteilhaften Ausführungsform ist vorgesehen, dass die Reduktion der Unterstützungskraft auf einen Sollwert für die Unterstützungskraft in Abhängigkeit von einem Fahrzeugzustand durchgeführt wird. Der Fahrzeugzustand kann insbesondere der Zustand einer elektrischen Energieversorgung im Fahrzeug sein, so zum Beispiel einer Batterie oder der im Fahrzeug vorliegenden Bordnetzspannung. Ein weiterer zu berücksichtigender Fahrzeugzustand kann eine Temperatur an wenigstens einer Bremsscheibe oder an wenigstens einem Bremsbelag sein. Durch diese Ausführungsform(en) kann die Bremsanlage Ressourcen- oder Materialschonend betrieben werden, indem ein Entladen der Batterie verhindert wird, oder auf den aktuellen Betriebszustand von Bremsscheiben / Bremsbelägen Rücksicht genommen wird. So kann ein veränderlicher Reibwert eines Bremsbelags aufgrund einer Temperaturänderung des Bremsbelags berücksichtigt werden, beispielsweise ein Abkühlen eines Bremsbelags / der Bremsbeläge im Stillstand nach vorangegangener Fahrt / Bremsennutzung.

In einer weiteren Ausgestaltung des erfindungsgemäßen Verfahrens ist vorgesehen, dass die Reduktion der Unterstützungskraft durch den Bremskraftverstärker zeitverzögert nach dem Feststellen des Stillstands des Fahrzeugs durchgeführt wird. Dies hat den Vorteil, dass beispielsweise nicht bei jedem Stillstand, automatisch das Verfahren durchgeführt wird, sondern beispielsweise erst, wenn das Fahrzeug schon eine Weile steht und/oder eine Absenkung der Unterstützungskraft wirklich Energie- und/oder Materialschonend ist. So kann es von Vorteil sein, das Verfahren im Stop- and Go-Verkehr zu verzögern bzw. ganz auszusetzen.

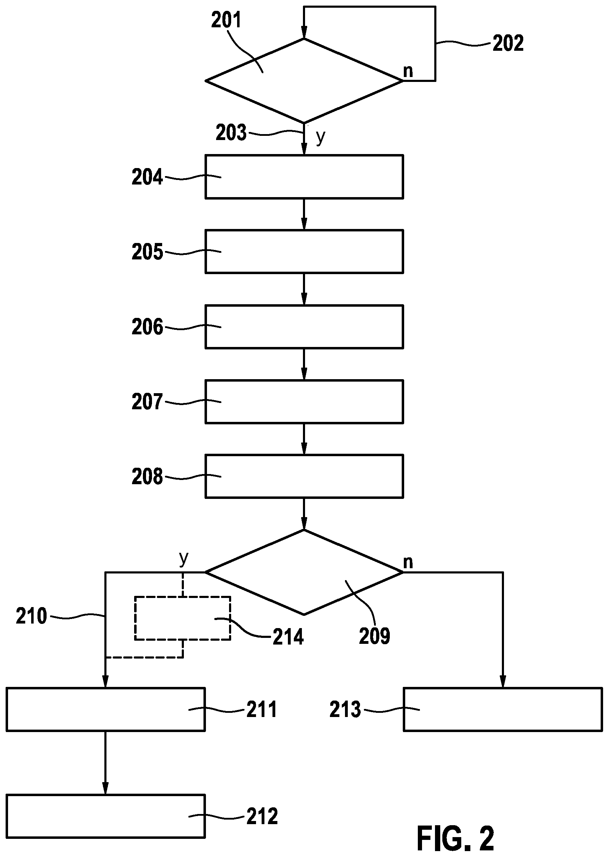

Diese Wartephase kann an allen Stellen des erfindungsgemäßen Verfahrens vorgesehen sein, und muss nicht zwingend an der in Figur **2** gezeigten Stelle im Verfahren durchgeführt werden.

Gemäß einer weiteren Ausgestaltung des erfindungsgemäßen Verfahrens kann der steuerbare Bremskraftverstärker ein steuerbarer elektromechanischer Bremskraftverstärker oder ein steuerbarer pneumatischer Bremskraftverstärker sein. Bei diesen zwei beispielhaften Ausführungsformen kann in beiden Fällen die Unterstützungskraft angepasst werden, um das Fahrzeug im Stillstand zu halten.

Gemäß der Erfindung ist außerdem eine **Auswerte- und Steuervorrichtung** zum Halten eines Fahrzeugs im Stillstand vorgesehen. Diese Auswerte- und Steuereinrichtung steuert den steuerbaren Bremskraftverstärker, der eine vom Fahrer über ein Betätigungselement aufgebrachte Eingangskraft um eine Unterstützungskraft zu einer Gesamtbetätigungskraft ergänzt. Des Weiteren steuert die Auswerte- und Steuervorrichtung eine Einstelleinrichtung zur von dem Druck im hydraulischen Bremssystem unabhängigen Einstellung eines Zusammenhangs zwischen einem Stellweg des Betätigungselements und der Eingangskraft $F\_in$.

Mittels der Auswerte- und Steuervorrichtung wird der Bremskraftverstärker so angesteuert, dass die Unterstützungskraft reduziert wird. Die Einstelleinrichtung wird derart angesteuert, dass der aus der Reduktion der Unterstützungskraft resultierenden Änderung des Zusammenhangs zwischen einem Stellweg des Betätigungselements und der Eingangskraft $F\_in$ durch ein vom Druck im hydraulischen Bremssystem unabhängiges Einstellen des Zusammenhangs mittels der Einstelleinrichtung, entgegengewirkt wird.

Mit Hilfe der Auswerte- und Steuervorrichtung wird im erfindungsgemäßen Verfahren die benötigte Betätigungskraft ermittelt, die auf einen Hauptbremszylinder zum Halten des Fahrzeugs im Stillstand wirken muss. Dabei werden Eingangsgrößen die einen Haltewunsch repräsentieren, sowie Eingangsgrößen die Fahrzeug- und/oder Umgebungsbedingungen repräsentieren berücksichtigt.

Außerdem steuert die Auswerte- und Steuervorrichtung, für den Fall, dass die Auswertevorrichtung im Rahmen einer Auswertung anhand von geeigneten Informationen festgestellt hat, dass die Gesamtbetätigungskraft größer als die benötigte Kraft ist, den Bremskraftverstärker derart an, dass die vom Bremskraftverstärker aufgebrachte Unterstützungskraft reduziert wird.

Die Auswerte- und Steuervorrichtung hat den Vorteil, dass alle zur Durchführung des erfindungsgemäßen Verfahrens notwendigen Größen und/oder Parameter zusammengeführt, ausgewertet, berechnet und zur Steuerung des Bremskraftverstärkers sowie der Einstelleinrichtung herangezogen werden. Es ist jedoch durchaus denkbar, dass die Auswerte- und Steuervorrichtung eine bereits in einem Bremssystem vorhandene Regel- und/oder Steuervorrichtung ist.

In einer weiteren vorteilhaften Ausführungsform ist vorgesehen, dass die Auswerte- und Steuervorrichtung im Falle, dass ein Fahrerbremswunsch bei Stillstand des Fahrzeugs vorliegt und dass die zum Halten des Fahrzeugs im Stillstand benötigte Kraft größer als die Gesamtbetätigungskraft ist, den Fahrer über diesen Zustand informiert. Eine solche Information kann in Form eines Signals erfolgen, welches direkt und/oder indirekt eine optische, haptische oder visuelle Meldung an den Fahrer auslöst. Dies birgt den Vorteil, dass bei einem in diesem Fall wahrscheinlich vorliegenden Defekt des Bremssystems der Fahrer darüber in Kenntnis gesetzt wird.

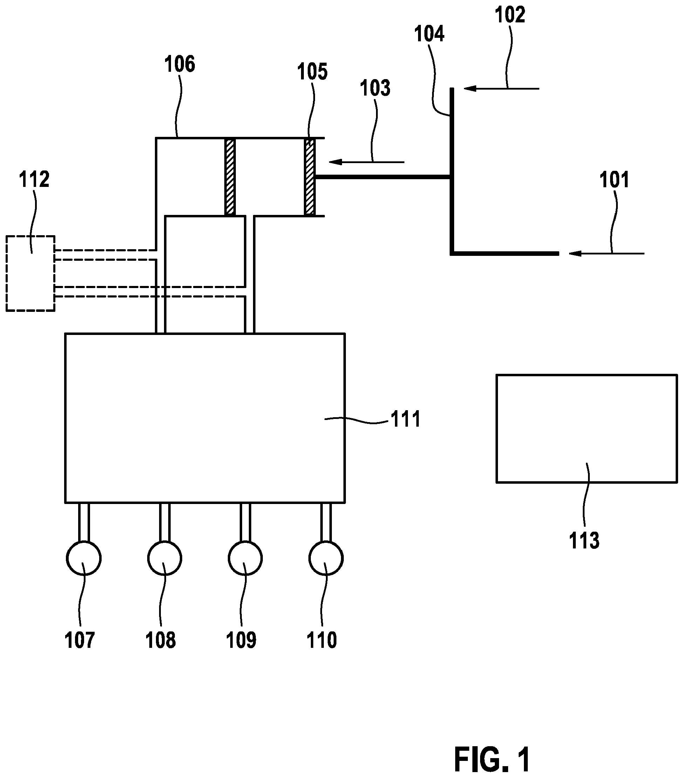

In Figur 1 ist ein hydraulisches Bremssystem schematisch dargestellt, um das Zusammenwirken der für die Erfindung notwendigen Komponenten zu erklären. Figur 2 zeigt eine schematische Darstellung der im erfindungsgemäßen Verfahren zu durchlaufenden Schritte. Die einzelnen Schritte werden im Folgenden näher erläutert.

**Ausführungsform der Erfindung**

Zur Darstellung des erfindungsgemäßen Verfahrens wird von einem Gesamtbremssystem ausgegangen welches ein hydraulisches Bremssystem umfasst, durchaus aber ein weiteres zusätzliches Bremssystem aufweisen kann. Das hydraulische Bremssystem umfasst einen steuerbaren Bremskraftverstärker, der eine vom Fahrer aufgebrachte Eingangskraft $F\_in$ **101** um eine Unterstützungskraft $F\_sup$ **102** zu einer Gesamtbetätigungskraft $F\_out$ **103** ergänzt. Diese Gesamtbetätigungskraft F_out **103** wirkt gegebenenfalls über ein Kopplungselement **104** auf einen Eingangskolben **105** eines Hauptbremszylinders **106,** was dazu führt dass ein Bremsdruck in Radbremszylindern **107, 108, 109, 110** des hydraulischen Bremssystem aufgebaut wird was zu einer Bremsung führt.

In dem hydraulischen Bremssystem kann ein Bremsdruckregelsystem **111** vorgesehen sein, welches sich flussabwärts vom Hauptzylinder in Richtung der Radbremszylinder befindet, beispielsweise ein ABS oder ESP System, auf welches hier nicht näher eingegangen wird.

Beispielshalber wird davon ausgegangen, dass der steuerbare Bremskraftverstärker ein elektromechanischer Bremskraftverstärker ist, allerdings stellt dies keine Einschränkung dar. Ebenso denkbar ist eine pneumatische, oder hydraulische Einrichtung zur Bremskraftverstärkung, sofern diese steuerbar ist in Bezug auf die Verstärkung. Die von dem steuerbaren elektromechanischen Bremskraftverstärker aufgebrachte Unterstützungskraft F_sup **102** kann durch Ansteuern der elektromechanischen Bremskraftverstärkers eingestellt werden. Der Betrag der Unterstützungskraft F_sup **102** ist im Fall einer regulären Bremsung abhängig von der vom Fahrer aufgebrachten Eingangskraft *F_in* **101** und kann beispielsweise einer entsprechenden Kennlinie entnommen werden. Ebenso ist es möglich, die Unterstützungskraft F_sup **102** anhand eines Pedalwegs des vom Fahrer zur Bremsung betätigten Betätigungselements der Bremsanlage durch Ansteuern des elektromechanischen Bremskraftverstärkers einzustellen, was ebenfalls wieder über eine entsprechende Kennlinie erfolgen kann. Solche Kennlinien können in Steuergeräten des Bremssystems vorgesehen und hinterlegt sein.

Der Bremskraftverstärker wird durch ein Steuergerät **113** gesteuert. Das Steuergerät kann selbstverständlich auch ein Regel- und/oder Steuergerät zur Steuerung des gesamten Bremssystems sein und muss nicht zwangsläufig nur den Bremskraftverstärker steuern.

Dieses Steuergerät **113** kann außerdem dasselbe sein wie das Steuergerät zur Durchführung des erfindungsgemäßen Verfahrens.

Des Weiteren kann dieses Steuergerät die Signale von Sensoren empfangen und weiterverarbeiten, welche für das erfindungsgemäße Verfahren relevant sind. Die Zeichnung nur eines einzelnen Steuergeräts besagt nicht, dass es genau ein Steuergerät für die Durchführung des Verfahrens geben muss. Ebenso sind mehrere, gegebenenfalls untereinander kommunizierende Steuergeräte denkbar.

Bei einem elektromechanischen Bremskraftverstärker bringt ein Elektromotor die Unterstützungskraft **102** auf, gegebenenfalls über wenigstens eine Getriebestufe. Dieser Elektromotor verbraucht Strom um die Unterstützungskraft aufzubringen.

Befindet sich ein Fahrzeug im Stillstand, beispielsweise in einem Stau oder an einer Ampel, so betätigt der Fahrer meist das Bremspedal mit einer Eingangskraft F_in **101,** um sein Fahrzeug im Stillstand zu halten. Der elektromechanische Bremskraftverstärker bringt eine entsprechende Unterstützungskraft F_sup **102** auf, beispielsweise gemäß den Vorgaben von Kennlinien wie oben erwähnt. Dabei ist es möglich, dass die Bremswirkung welche durch die den Hauptzylinder betätigende Kraft F_out hervorgerufen wird, größer ist als für das Halten des Fahrzeugs im Stillstand notwendig ist.

Dies führt im Falle eines elektromechanischen Bremskraftverstärkers zu einem unnötigen Energieverbrauch. Um diesen Energieverbrauch zu verringern kommt kann das erfindungsgemäße Verfahren zum Einsatz kommen.

Hierbei wird in einem ersten Schritt **201** festgestellt, ob sich das Fahrzeug im Stillstand befindet. Dies kann beispielweise von Raddrehzahlsensoren (nicht eingezeichnet) festgestellt werden. Liegt kein Stillstand vor, wird das erfindungsgemäße Verfahren gemäß Schritt **202** ausgesetzt bzw. beginnt von vorne.

Liegt ein Stillstand des Fahrzeugs vor, so verläuft das Verfahren weiter (Schritt **203).**

In einem Schritt **204** wird festgestellt, ob der Fahrer das Bremspedal betätigt. Dies kann beispielsweise anhand des Bremslichtschalters geschehen.

In Schritt **205** wird die Fahrbahnsteigung oder eine von der Fahrbahnsteigung abhängige Größe mittels geeigneter Sensoren ermittelt. Derartige Sensoren sind beispielsweise Beschleunigungssensoren, welche bei der Steuerung von Airbag-Systemen und/oder ABS/ESP Systemen herangezogen werden. Liegt keine Fahrgeschwindigkeit und keine (vom Fahrer initiierte) Beschleunigung des Fahrzeugs vor, so kann aus den Signalen eines Beschleunigungssensors auf eine Fahrbahnsteigung geschlossen werden. Selbstverständlich kann auch ein zusätzlicher Sensor dafür vorgesehen sein.

In Schritt **206** kann unter anderem aus der in Schritt **205** gewonnenen Information eine Haltekraft bestimmt werden, die notwendig ist um das Fahrzeug im Stillstand zu halten. Die Haltekraft ist hierbei eine Kraft, die zwischen Fahrzeug und Fahrbahn wirkt.

Aus der ermittelten notwendigen Haltekraft lässt sich in Schritt **207** ein Druck im Hauptzylinder ermitteln, der benötigt wird um die in Schritt **206** ermittelte Haltekraft aufzubringen.

Aus diesem Druck im Hauptzylinder wird in Schritt **208** eine benötigte Betätigungskraft F_needed berechnet, ermittelt oder aus geeigneten Kennlinien entnommen, welche auf den Hauptzylinder wirken muss, so dass der Druck im Hauptzylinder dem zum Halten des Fahrzeugs benötigten Druck entspricht. Diese Kraft F_needed wirkt hierbei auf den Hauptzylinder **106,** genauer gesagt auf den Eingangskolben **105** des Hauptzylinders **106.**

In einem nächsten Schritt **209** wird überprüft, ob die benötigte Kraft F_needed kleiner ist als die vom Fahrer und dem Bremskraftverstärker gemeinsam aufgebrachte Gesamtbetätigungskraft F_out, die dem Hauptzylinder beaufschlagt wird. Die Kraft F_out kann entweder direkt mittels eines geeigneten Kraftsensors ermittelt werden, oder sie lässt sich anhand einer von der Gesamtbetätigungskraft F_out abhängigen Größe ableiten. So ergibt sich beispielsweise die aktuelle Gesamtbetätigungskraft F_out aus dem Querschnitt des Hauptzylinders sowie dem vorliegenden Vordruck im Bremssystem, der gemessen werden kann.

Ebenso ist es möglich die Gesamtbetätigungskraft aus der vom Fahrer aufgebrachten Eingangskraft F_in sowie der vom Bremskraftverstärker aufgebrachten Unterstützungskraft abzuleiten, zu errechnen und/oder zu ermitteln. Dabei kann die Eingangskraft F_in über einen Kraftsensor gemessen werden oder aus anderen von der Eingangskraft F_in abhängigen Größen abgeleitet werden. Die vorliegende vom Bremskraftverstärker aufgebrachte Unterstützungskraft F_sup ist aus der Charakteristik des Bremskraftverstärkers ableitbar und/oder ermittelbar, die wie oben bereits beschrieben in Form von Kennlinien in einem Steuergerät abgelegt sein kann.

Ist die Kraft F_needed größer als die Kraft F_out, so kann das Verfahren in einem Schritt **213** weiterverlaufen, in dem ein Signal ausgegeben wird, welches einen Fehler anzeigt, insbesondere ein Signal, das eine optische, haptische und/oder visuelle Meldung an den Fahrer auslöst.

Ist dagegen die Kraft F_needed kleiner als die vom Fahrer und dem Bremskraftverstärker aufgebrachte Gesamtbetätigungskraft F_out, so wird das Verfahren in einem Schritt **210** fortgeführt.

Die Gesamtbetätigungskraft F_out **103** setzt sich wie bereits dargestellt aus der Summe der vom Fahrer aufgebrachten Kraft F_in **101** sowie der vom Bremskraftverstärker aufgebrachten Kraft F_sup **102** zusammen:

$$F\_out = F\_in + F\_sup$$

Das Ergebnis aus Schritt **209** besagt, dass die Gesamtbetätigungskraft F_out 103 größer ist, als die zum Halten des Fahrzeugs benötigte Kraft F_needed und somit auch, dass die Summe aus der vom Fahrer aufgebrachten Kraft F_in **101** sowie der vom Bremskraftverstärker aufgebrachten Kraft F_sup **102** zusammen größer ist, als die zum Halten des Fahrzeugs benötigte Kraft.

Also gilt:

$$F\_needed < F\_in + F\_sup$$

In einem Schritt **211** wird nun die Unterstützungskraft des Bremskraftverstärkers F_sup auf einen Sollwert F_sup,red reduziert. Dieser Sollwert bestimmt sich gemäß:

$$F\_sup,red = a\_s \, F\_needed - F\_in.$$

Der Wert a_s ist ein Sicherheitsbeiwert, der gewährleistet, dass der Sollwert für die vom Bremskraftverstärker aufgebrachte Unterstützungskraft F_sup,red immer ausreichend groß ist und es ist vorgesehen, dass a_s > **1** ist.

Der Wert a_s kann von weiteren Größen abhängen, wie zum Beispiel dem Fahrbahnbelag. Außerdem kann über den Sicherheitsbeiwert ein veränderter Reibwert der Bremsen auf Grund von veränderter Bremsscheibentemperatur oder vorliegender Feuchtigkeit, den verwendeten Bremsbelägen oder dem Zustand bzw. der Alterung der Bremsbeläge (Verglasung) berücksichtigt werden. Ebenso ist es möglich das vorliegende Gewicht des Fahrzeugs beziehungsweise die vorliegende Beladung über den Sicherheitsbeiwert a_s bei der Bestimmung des einzustellenden Sollwerts F_sup, red zu berücksichtigen. Die Anpassung eines Sicherheitsbeiwertes a_s kann während der Fahrzeugbetriebes geschehen, oder für Größen, die sich nicht, oder nicht wesentlich während einer Fahrzeugnutzung verändern, beispielsweise während eines Pre-Drive-checks.

Ebenso ist es möglich, die einzustellende reduzierte Unterstützungskraft aus wenigstens einer Kennlinie und/oder wenigstens einem Kennfeld bei gegebener Fahrerbetätigungskraft F_in und benötigter Betätigungskraft F_needed zu entnehmen. Diese Kennlinien und/oder Kennfelder können ebenso Abhängigkeiten aufweisen, wie sie oben in Bezug auf den Sicherheitsbeiwert a_s beschrieben wurden, also von weiteren Größen abhängen, wie zum Beispiel, dem Reibwert, dem Fahrbahnbelag oder der Feuchtigkeit.

Optional kann vorgesehen sein, dass zwischen Schritt **209** im erfindungsgemäßen Verfahren, also dem Feststellen einer zu großen Betätigungskraft F_out gegenüber der benötigten Haltekraft F_needed und dem Einstellen einer neuen Unterstützungskraft F_sup,red in Schritt **211,** im Schritt **214** eine Wartezeit vorgesehen ist, alternativ zum Pfad **210.** Ein solches zeitliches Unterbrechen des Verfahrens kann jedoch auch an anderer Stelle des erfindungsgemäßen Verfahrens vorgesehen sein und ist nicht auf diese Positionierung im Ablauf des Verfahrens eingeschränkt.

Des weiteren kann die Reduktion der Unterstützungskraft F_sup in Abhängigkeit einer Größe durchgeführt wird, die einen Fahrzeugzustand repräsentiert, so zum Beispiel in Abhängigkeit des Ladezustands einer Spannungsquelle, der Bordnetzspannung oder einer Temperatur, insbesondere der Temperatur einer Bremsscheibe oder eines Bremsbelags.

Diese weiteren und/oder zusätzlichen Ausführungsformen ermöglichen es, das Verfahren erst durchzuführen wenn zum Beispiel die Batterie zur Neige geht. Da durch das Verfahren Strom gespart wird, kann einem Entladen der Batterie entgegengewirkt werden.

Ein weiterer Fahrzeugzustand, der bei der Durchführung des Verfahrens berücksichtigt werden kann, ist eine Temperatur an einer Bremsscheibe oder an einem Bremsbelag. Sollte durch längeres andauerndes Bremsen, z.B. im Rahmen einer Bergabfahrt, die Temperatur wenigstens einer Bremsscheibe oder wenigstens eines Bremsbelags beispielsweise einen Grenzwert überschreiten, so kann bei darauffolgendem Halten des Fahrzeugs im Stillstand der Sollwert für die Gesamtbetätigungskraft ausgehend vom Bremskraftverstärker sowie vom Fahrer gemäß dem erfindungsgemäßen Verfahren angepasst werden, speziell erhöht werden, um so den bei höheren Temperaturen an Bremsscheibe oder Bremsbelag in der Regel niedrigeren Reibwert der Bremsbeläge zu kompensieren.

Zu den erwähnten Fahrzeugzuständen muss gesagt werden, dass es für die Durchführung des Verfahrens nicht erforderlich ist eine Temperatur direkt zu messen, ebenso möglich ist die Bestimmung, Ermittlung, Schätzung der Temperatur und/oder einer die Temperatur repräsentierenden Größe.

Genauso kann der Ladezustand einer Batterie oder die Bordnetzspannung durch unterschiedliche Größen repräsentiert sein, wie beispielsweise Spannung oder Strom. Zur Bestimmung der die Fahrzeugzustände repräsentierenden Größen können geeignete Sensoren vorgesehen bzw. bereits im Fahrzeug integriert sein. Diese Sensoren können beispielsweise durch das Regel- und/oder Steuergerät zur Steuerung des gesamten Bremssystems überwacht und/oder ausgelesen werden.

Wenn wie im oben beschriebenen Verfahren die Unterstützungskraft $F\_sup$ des steuerbaren Bremskraftverstärkers durch Ansteuern des Bremskraftverstärkers, insbesondere auf einen Sollwert $F\_sup,red$, reduziert wird, so wird dadurch der Druck im hydraulischen Bremssystem verändert, insbesondere verringert.

Eine solche Druckabnahme hat zur Folge, dass das hydraulische Bremssystem weniger Volumen an Bremsflüssigkeit aufnimmt als vor Durchführung des Schrittes **211,** was unter anderem zur Folge haben kann, dass das Bremspedal entgegen seiner ursprünglichen Betätigungsrichtung zum Bremsen/Halten des Fahrzeugs versetzt werden würde. Der dem Fahrer bekannte Zusammenhang zwischen Pedalweg und Pedalkraft wird dadurch verändert.

Ein Versetzen des Pedals im Stillstand stellt für den Fahrer eine irritierende Rückwirkung dar. In einem Schritt **212** ist vorgesehen, eine solche irritierende Rückwirkung im erfindungsgemäßen Verfahren zu vermeiden.

Dazu wird mittels einer Zusatzeinrichtung **112,** welche in der Lage ist den Pedalweg-Pedalkraft-Zusammenhang unabhängig vom Druck im hydraulischen Bremssystem einzustellen, dieser Änderung des Zusammenhangs zwischen Pedalweg und Pedalkraft entgegengewirkt, insbesondere wird diese Änderung kompensiert.

Als Beispiel ist eine solche Vorrichtung **112** in Figur **1** gestrichelt eingezeichnet, allerdings hängt diese Positionierung stark von der Art der verwendeten Zusatzeinrichtung ab.

Eine solche Vorrichtung kann eine Vorrichtung zum Anpassen von Pedalrückwirkungen sein, wie sie bei Bremssystemen zur Anwendung kommt, die beispielsweise neben einem hydraulischen Bremssystem ein weiteres Bremssystem umfassen, welches keine Pedalrückwirkung erzeugt. Kombiniert man die Bremswirkung der beiden Bremssysteme zu einer Gesamtbremswirkung so kann es hier ebenfalls notwendig sein, die Pedalrückwirkung durch eine derartige Zusatzeinrichtung anzupassen. Als Beispiel sind Pedalsimulatorlösungen bei einer elektrohydraulischen Bremse (EHB) oder eine Hydraulikspeichereinheit mit Hydraulikkammer und steuerbarem Ventil zu nennen. Ebenso denkbar sind weitere Einrichtungen in einem hydraulischen Bremssystem, welche in der Lage sind, Volumen an Bremsflüssigkeit dem Bremssystem zu entnehmen, beziehungsweise dieses zu verstecken, ohne den Bremsdruck im Bremssystem dabei zu verändern.

Zusammenfassend kann gesagt werden, dass bei Verwendung eines steuerbaren Bremskraftverstärkers der Stromverbrauch beim Halten eines Fahrzeugs im Stillstand gesenkt wird, indem der Bremskraftverstärker nach dem erfindungsgemäßen Verfahren angesteuert wird. Das erfindungsgemäße Verfahren beinhaltet, dass die vom Bremskraftverstärker ausgehende Unterstützungskraft reduziert wird, wenn eine Gesamtbetätigungskraft die von Fahrer und Bremskraftverstärker gemeinsam auf den Hauptzylinder wirkt, größer ist als eine benötigte Betätigungskraft die auf den Hauptzylinder wirken müsste um das Fahrzeug im Stillstand zu halten. Dazuhin wird eine für den Fahrer wahrnehmbare Rückwirkung auf das Bremspedal, hervorgerufen durch die Anpassung der Unterstützungskraft mittels einer Zusatzeinrichtung vermieden.

## Patentansprüche

1. **Verfahren zum Halten eines Fahrzeugs im Stillstand,** wobei das Fahrzeug ein hydraulisches Bremssystem aufweist, mit einem steuerbaren Bremskraftverstärker, der eine vom Fahrer über ein Betätigungselement aufgebrachte Eingangskraft $F\_in$ **(101)** um eine Unterstützungskraft $F\_sup$ **(102)** zu einer Gesamtbetätigungskraft $F\_out$ **(103)** ergänzt, bei dem die von dem steuerbaren Bremskraftverstärker aufgebrachte Unterstützungskraft $F\_sup$ **(102)** reduziert wird und bei dem einer aus dieser Reduktion resultierenden Änderung des Zusammenhangs zwischen Eingangskraft $F\_in$ und Stellweg des Betätigungselements durch vom Druck im hydraulischen Bremssystem unabhängiges Einstellen des Zusammenhangs entgegengewirkt wird, insbesondere diese Änderung kompensiert, wird.

2. Verfahren nach Anspruch **1, dadurch gekennzeichnet, dass** die von dem steuerbaren Bremskraftverstärker aufgebrachte Unterstützungskraft $F\_sup$ **(102)** reduziert wird, wenn eine für ein Halten des Fahrzeugs im Stillstand benötigte Betätigungskraft $F\_needed,$ welche auf einen Hauptbremszylinder **(106)** wirkt, kleiner ist als die Gesamtbetätigungskraft *F_out (103), insbesondere, dass die* Unterstützungskraft *F_sup* **(102)** auf einen Sollwert *F_sup, red* reduziert wird.

3. Verfahren nach Anspruch **2, dadurch gekennzeichnet, dass** ein Sollwert für die durch den Bremskraftverstärker aufgebrachte Unterstützungskraft *F_sup,red* auf Basis der benötigten Betätigungskraft *F_needed* sowie der Eingangskraft *F_in* (**101**), unter Berücksichtigung eines Sicherheitswertes a_s ermittelt wird.

4. Verfahren nach Anspruch **3, dadurch gekennzeichnet, dass** der Sollwert für die Unterstützungskraft *F_sup,red* gemäß:

$$F\_supr,red = a\_s\ F\_neeeded - F\_in$$

ermittelt wird.

5. Verfahren nach Anspruch **2, dadurch gekennzeichnet, dass** die Kraft *F_needed* unter Berücksichtigung einer die Fahrbahnsteigung repräsentierenden Größe ermittelt wird, wobei das Bremssystem einen Sensor umfasst, mit dem die die Fahrbahnsteigung repräsentierenden Größe ermittelt wird.

6. Verfahren nach Anspruch **2, dadurch gekennzeichnet, dass** die Kraft *F_needed* unter Berücksichtigung eines Fahrerwunsches ermittelt wird, insbesondere anhand einer Betätigung eines Betätigungselements für die hydraulische Bremsanlage.

7. Verfahren nach Anspruch **2, dadurch gekennzeichnet, dass** die Reduktion der Unterstützungskraft *F_sup (102)* auf einen Sollwert *F_sup,red* in Abhängigkeit von einem Fahrzeugzustand durchgeführt wird, insbesondere in Abhängigkeit von dem Zustand einer elektrischen Energieversorgung im Fahrzeug und/oder einer Temperatur insbesondere einer Temperatur an wenigstens einer Bremsscheibe oder wenigstens einem Bremsbelag.

8. Verfahren nach Anspruch **2, dadurch gekennzeichnet, dass** die Reduktion der Unterstützungskraft *F_sup (102)* auf einen Sollwert *F_sup,red* zeitverzögert nach Feststellen des Stillstands durchgeführt wird.

9. Verfahren nach wenigstens einem der vorhergehenden Ansprüche, **dadurch gekennzeichnet, dass** der steuerbare Bremskraftverstärker eine steuerbarer elektromechanischer oder ein steuerbarer pneumatischer Bremskraftverstärker ist.

10. **Auswerte- und Steuervorrichtung (113)** zur Durchführung des Verfahrens nach wenigstens einem der vorhergehenden Ansprüche, wobei das Fahrzeug ein hydraulisches Bremssystem aufweist, zur Steuerung

   - eines steuerbaren Bremskraftverstärkers, der eine vom Fahrer über ein Betätigungselement aufgebrachte Eingangskraft *F_in* **(101)** um eine Unterstützungskraft *F_sup* **(102)** zu einer Gesamtbetätigungskraft *F_out* **(103)** ergänzt, sowie
   - einer Einstelleinrichtung **(112)** zur vom Druck im hydraulischen Bremssystem unabhängigen Einstellung eines Zusammenhangs zwischen einem Stellweg des Betätigungselements und der Eingangskraft F_in

   wobei mittels der Auswerte- und Steuervorrichtung die von dem steuerbaren Bremskraftverstärker aufgebrachte Unterstützungskraft *F_sup* **(102)** reduziert wird, und einer aus dieser Reduktion resultierenden Änderung des Zusammenhangs zwischen Eingangskraft F_in und Stellweg des Betätigungselements durch vom Druck im hydraulischen Bremssystem unabhängiges Einstellen mittels der Einstellvorrichtung **(112)** entgegengewirkt wird, insbesondere diese Änderung kompensiert wird.

11. Auswerte- und Steuervorrichtung **(113)** nach Anspruch **10 dadurch gekennzeichnet, dass** mittels der Auswerte- und Steuervorrichtung **(113)** die von dem steuerbaren Bremskraftverstärker aufgebrachte Unterstützungskraft *F_sup* **(102)** auf einen Sollwert *F_sup,red* reduziert wird, wenn eine für ein Halten des Fahrzeugs benötigte Betätigungskraft *F_needed,* welche auf einen Hauptbremszylinder **(106)** wirkt, kleiner als die Gesamtbetätigungskraft *F_out* **(103)** ist.

12. Auswerte - und Steuervorrichtung **(113)** nach Anspruch **11 dadurch gekennzeichnet, dass** durch die Auswerte- und Steuervorrichtung ein Sollwert für die durch den Bremskraftverstärker aufgebrachte Unterstützungskraft *F_sup,*

*red* auf Basis der benötigten Betätigungskraft *F_needed* sowie der Eingangskraft *F_in* (**101**), unter Berücksichtigung eines Sicherheitswertes a_s ermittelt wird.

13. Auswerte- und Steuervorrichtung nach Anspruch **10, dadurch gekennzeichnet, dass** die Auswerte- und Steuereinrichtung (**113**) für den Fall, dass ein Fahrerbremswunsch bei Stillstand des Fahrzeugs vorliegt und dass die benötigte Kraft F_needed größer als die Gesamtbetätigungskraft F_out ist, ein Signal ausgegeben wird, welches einen Fehler anzeigt, insbesondere ein Signal, das eine optische, haptische und/oder visuelle Meldung an den Fahrer auslöst.

14. Auswerte- und Steuervorrichtung (**113**) nach wenigstens einem der vorhergehenden Ansprüche 10 bis 13 **dadurch gekennzeichnet, dass** die Auswerte- und Steuervorrichtung (**113**) eine für ein Halten des Fahrzeugs im Stillstand benötigte Betätigungskraft *F_needed* wirkend auf einen Hauptbremszylinder (**106**) unter Berücksichtigung eines Fahrerwunsches ermittelt, insbesondere anhand einer Betätigung eines Betätigungselements für die hydraulische Bremsanlage und/oder unter Berücksichtigung einer die Fahrbahnsteigung repräsentierenden Größe ermittelt und/oder unter Berücksichtigung von Eingangsgrößen die Fahrzeug- und/oder Umgebungsbedingungen repräsentieren.

15. Auswerte - und Steuervorrichtung (**113**) nach wenigstens einem der vorhergehenden Ansprüche, 10 bis 14 **dadurch gekennzeichnet, dass** die Auswerte- und Steuervorrichtung die Reduktion der Unterstützungskraft *F_sup (**102**)* auf einen Sollwert *F_sup,red* in Abhängigkeit von einem Fahrzeugzustand durchführt, insbesondere in Abhängigkeit von dem Zustand einer elektrischen Energieversorgung im Fahrzeug und/oder einer Temperatur insbesondere einer Temperatur an wenigstens einer Bremsscheibe oder wenigstens einem Bremsbelag und/oder zeitverzögert nach Feststellen des Stillstands durchführt.

**Claims**

1. Method for holding a vehicle at a standstill, wherein the vehicle has a hydraulic brake system comprising a controllable braking force amplifier which supplements an input force *F_in* (101), which is applied by the driver by means of an operating element, with an assistance force *F_sup* (102) to form a total operating force *F_out* (103), in which method the assistance force *F_sup* (102) which is applied by the controllable braking force amplifier is reduced, and in which method a change in the relationship between the input force *F_in* and the actuating movement of the operating element, which change results from said reduction, is countered, in particular compensated for, by adjusting the relationship independently of the pressure in the hydraulic brake system.

2. Method according to Claim 1, **characterized in that** the assistance force *F_sup* (102) which is applied by the controllable braking force amplifier is reduced if an operating force *F_needed* which is required for holding the vehicle at a standstill and acts on a main brake cylinder (106) is smaller than the total operating force *F_out* (103), in particular **in that** the assistance force *F_sup* (102) is reduced to a setpoint value *F_sup, red.*

3. Method according to Claim 2, **characterized in that** a setpoint value for the assistance force *F_sup,red* which is applied by the braking force amplifier is ascertained on the basis of the required operating force *F_needed* and the input force *F_in* (101), taking into account a safety value *a_s*.

4. Method according to Claim 3, **characterized in that** the setpoint value for the assistance force *F_sup,red* is ascertained in accordance with:

$$\text{F\_sup,red = a\_s F\_needed - F\_in}$$

5. Method according to Claim 2, **characterized in that** the force *F_needed* is ascertained taking into account a variable which represents the roadway gradient, wherein the brake system comprises a sensor with which the variable which represents the roadway gradient is ascertained.

6. Method according to Claim 2, **characterized in that** the force *F_needed* is ascertained taking into account a driver's request, in particular on the basis of operation of an operating element for the hydraulic braking system.

7. Method according to Claim 2, **characterized in that** the reduction in the assistance force $F\_sup$ (102) to a setpoint value $F\_sup,red$ is carried out depending on a vehicle state, in particular depending on the state of an electrical power supply system in the vehicle and/or a temperature, in particular a temperature at at least one brake disc or at least one brake lining.

8. Method according to Claim 2, **characterized in that** the reduction in the assistance force $F\_sup$ (102) to a setpoint value $F\_sup,red$ is carried out with a time delay after a standstill has been established.

9. Method according to at least one of the preceding claims, **characterized in that** the controllable braking force amplifier is a controllable electromechanical or a controllable pneumatic braking force amplifier.

10. Evaluation and control apparatus (113) for carrying out the method according to at least one of the preceding claims, wherein the vehicle has a hydraulic brake system for controlling

   - a controllable braking force amplifier which supplements an input force $F\_in$ (101), which is applied by the driver by means of an operating element, with an assistance force $F\_sup$ (102) to form a total operating force $F\_out$ (103), and also
   - a setting device (112) for adjusting a relationship between an actuating movement of the operating element and the input force $F\_in$ independently of the pressure in the hydraulic brake system,

   wherein, by means of the evaluation and control apparatus, the assistance force $F\_sup$ (102) which is applied by the controllable braking force amplifier is reduced and a change in the relationship between the input force $F\_in$ and the actuating movement of the operating element, which change results from said reduction, is countered, in particular compensated for, by adjusting the relationship independently of the pressure in the hydraulic brake system by means of the adjusting apparatus (112).

11. Evaluation and control apparatus (113) according to Claim 10, **characterized in that**, by means of the evaluation and control apparatus (113), the assistance force $F\_sup$ (102) which is applied by the controllable braking force amplifier is reduced to a setpoint value $F\_sup,red$ when an operating force $F\_needed$ which is required for holding the vehicle and acts on a main brake cylinder (106) is smaller than the total operating force $F\_out$ (103).

12. Evaluation and control apparatus (113) according to Claim 11, **characterized in that** a setpoint value for the assistance force $F\_sup,red$ which is applied by the braking force amplifier is ascertained by the evaluation and control apparatus on the basis of the required operating force $F\_needed$ and the input force $F\_in$ (101), taking into account a safety value $a\_s$.

13. Evaluation and control apparatus according to Claim 10, **characterized in that** the evaluation and control device (113) outputs a signal which indicates a fault, in particular a signal which triggers an optical, haptic and/or visual message to the driver, if a braking request is made by the driver when the vehicle is at a standstill and if the required force $F\_needed$ is greater than the total operating force $F\_out.$

14. Evaluation and control apparatus (113) according to at least one of the preceding Claims 10 to 13, **characterized in that** the evaluation and control apparatus (113) ascertains an operating force $F\_needed$ which is required for holding the vehicle at a standstill and acts on a main brake cylinder (106) taking into account a driver's request, in particular on the basis of operation of an operating element for the hydraulic braking system and/or is ascertained taking into account a variable which represents the roadway gradient and/or taking into account input variables which represent vehicle and/or environmental conditions.

15. Evaluation and control apparatus (113) according to at least one of the preceding Claims 10 to 14, **characterized in that** the evaluation and control apparatus carries out the reduction in the resistance force $F\_sup$ (102) to a setpoint value $F\_sup,red$ depending on a vehicle state, in particular depending on the state of an electrical power supply system in the vehicle and/or a temperature, in particular a temperature at at least one brake disc or at least one brake lining and/or with a time delay after the standstill has been established.

**Revendications**

1. Procédé pour maintenir un véhicule à l'arrêt, le véhicule présentant un système de frein hydraulique avec un servofrein commandable qui complète une force d'entrée *F_in* (101) appliquée par le conducteur par le biais d'un élément d'actionnement d'une force d'assistance *F_sup* (102) pour obtenir une force d'actionnement totale *F_out* (103), la force d'assistance *F_sup* (102) appliquée par le servofrein commandable étant réduite et une modification, résultant de cette réduction, du rapport entre la force d'entrée *F_in* et la course de déplacement de l'élément d'actionnement, étant contrée par l'ajustement du rapport, indépendant de la pression dans le système de frein hydraulique, en particulier cette modification étant compensée.

2. Procédé selon la revendication 1, **caractérisé en ce que** la force d'assistance *F_sup* (102) appliquée par le servofrein commandable est réduite lorsqu'une force d'actionnement *F_needed* nécessaire pour maintenir le véhicule à l'arrêt, qui agit sur un cylindre de frein principal (106), est inférieure à la force d'actionnement totale *F_out* (103), en particulier **en ce que** la force d'assistance *F_sup* (102) est réduite à une valeur de consigne *F_sup,red.*

3. Procédé selon la revendication 2, **caractérisé en ce qu'**une valeur de consigne pour la force d'assistance *F_sup, red* appliquée par le servofrein est déterminée sur la base de la force d'actionnement nécessaire *F_needed* et de la force d'entrée *F_in* (101), en tenant compte d'une valeur de sécurité *a_s*.

4. Procédé selon la revendication 3, **caractérisé en ce que** la valeur de consigne pour la force d'assistance *F_sup, red* est déterminée par la relation suivante :

$$F\_sup,red = a\_s\ F\_needed - F\_in.$$

5. Procédé selon la revendication 2, **caractérisé en ce que** la force *F_needed* est déterminée en tenant compte d'une grandeur représentant la pente de la route, le système de frein comprenant un capteur avec lequel la grandeur représentant la pente de la route est détectée.

6. Procédé selon la revendication 2, **caractérisé en ce que** la force *F_needed* est déterminée en tenant compte d'un souhait du conducteur, en particulier à l'aide d'un actionnement d'un élément d'actionnement pour l'installation de frein hydraulique.

7. Procédé selon la revendication 2, **caractérisé en ce que** la réduction de la force d'assistance *F_sup* (102) à une valeur de consigne *F_sup,red* est effectuée en fonction d'un état du véhicule, en particulier en fonction de l'état d'une alimentation en énergie électrique dans le véhicule et ou d'une température, en particulier d'une température au niveau d'au moins un disque de frein ou au niveau d'au moins une garniture de frein.

8. Procédé selon la revendication 2, **caractérisé en ce que** la réduction de la force d'assistance *F_sup* (102) à une valeur de consigne *F_sup,red* est effectuée de manière retardée dans le temps après constatation de l'arrêt.

9. Procédé selon au moins l'une quelconque des revendications précédentes, **caractérisé en ce que** le servofrein commandable est un servofrein électromécanique commandable ou pneumatique commandable.

10. Dispositif d'analyse et de commande (113) pour mettre en oeuvre le procédé selon au moins l'une quelconque des revendications précédentes, dans lequel le véhicule présente un système de frein hydraulique, pour commander

   - un servofrein commandable qui complète une force d'entrée *F_in* (101) appliquée par un conducteur par le biais d'un élément d'actionnement d'une force d'assistance *F_sup* (102) pour obtenir une force d'actionnement totale *F_out* (103),
   - un dispositif d'ajustement (112) pour l'ajustement, indépendant de la pression dans le système de frein hydraulique, d'une relation entre une course de réglage de l'élément d'actionnement et la force d'entrée *F_in,*

   la force d'assistance *F_sup* (102) appliquée par le servofrein commandable étant réduite au moyen du dispositif d'analyse et de commande et une modification, résultant de cette réduction, du rapport entre la force d'entrée *F_in* et la course de déplacement de l'élément d'actionnement, étant contrée par l'ajustement, indépendant de la pression dans le système de frein hydraulique, au moyen du dispositif d'ajustement (112), en particulier cette modification étant compensée.

11. Dispositif d'analyse et de commande (113) selon la revendication 10, **caractérisé en ce qu'**au moyen du dispositif d'analyse et de commande (113), la force d'assistance F_sup (102) appliquée par le servofrein commandable est réduite à une valeur de consigne F_sup,red lorsqu'une force d'actionnement *F_needed* nécessaire pour maintenir le véhicule à l'arrêt, qui agit sur un cylindre de frein principal (106), est inférieure à la force d'actionnement totale *F_out* (103).

12. Dispositif d'analyse et de commande (113) selon la revendication 11, **caractérisé en ce qu'**une valeur de consigne pour la force d'assistance *F_sup,red* appliquée par le servofrein est déterminée par le dispositif d'analyse et de commande sur la base de la force d'actionnement nécessaire *F_needed* et de la force d'entrée *F_in* (101), en tenant compte d'une valeur de sécurité *a_s*.

13. Dispositif d'analyse et de commande selon la revendication 10, **caractérisé en ce que** le dispositif d'analyse et de commande (113), au cas où un souhait de freinage du conducteur existe à l'arrêt du véhicule et que la force nécessaire *F_needed* est supérieure à la force d'actionnement totale *F_out*, un signal est émis, lequel indique une erreur, en particulier un signal qui déclenche un avertissement optique, tactique et/ou visuel pour le conducteur.

14. Dispositif d'analyse et de commande (113) selon au moins l'une quelconque des revendications précédentes 10 à 13, **caractérisé en ce que** le dispositif d'analyse et de commande (113) détermine une force d'actionnement *F_needed* nécessaire pour maintenir le véhicule à l'arrêt, agissant sur un cylindre de frein principal (106) en tenant compte d'un souhait du conducteur, en particulier à l'aide d'un actionnement d'un élément d'actionnement pour l'installation de frein hydraulique et/ou en tenant compte d'une grandeur représentant la pente de la route et/ou en tenant compte de grandeurs d'entrée qui représentent des conditions du véhicule et/ou des conditions de l'environnement.

15. Dispositif d'analyse et de commande (113) selon au moins l'une quelconque des revendications précédentes 10 à 14, **caractérisé en ce que** le dispositif d'analyse et de commande effectue la réduction de la force d'assistance *F_sup* (102) à une valeur de consigne *F_sup,red* en fonction d'un état du véhicule, en particulier en fonction de l'état d'une alimentation en énergie électrique dans le véhicule et/ou d'une température, en particulier d'une température au niveau d'au moins un disque de frein ou au niveau d'au moins une garniture de frein et/ou l'effectue de manière retardée dans le temps après la constatation de l'arrêt.

**FIG. 1**

FIG. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007016136 A1
- DE 102008012874 A1
- DE 19950029 A1